# FASCICULE DE BREVET EUROPEEN

(11) **EP 3 627 270 B1**
(45) Date de publication et mention de la délivrance du brevet: **29.03.2023**
(21) Numéro de dépôt: 19197969.9
(22) Date de dépôt: 18.09.2019
(51) Int. Cl.: G05D 1/02, B60W 30/00, G01C 21/00

(54) **DISPOSITIF ÉLECTRONIQUE DE DÉTERMINATION D'UNE TRAJECTOIRE D'ARRÊT D'URGENCE D'UN VÉHICULE AUTONOME, VÉHICULE ET PROCÉDÉ ASSOCIÉS**
ELEKTRONISCHE VORRICHTUNG ZUR BESTIMMUNG DER NOTBREMSBAHN EINES AUTONOMEN FAHRZEUGS, ENTSPRECHENDES FAHRZEUG UND VERFAHREN
ELECTRONIC DEVICE FOR DETERMINING A TRAJECTORY OF EMERGENCY STOPPING OF AN AUTONOMOUS VEHICLE, ASSOCIATED VEHICLE AND METHOD

(30) Priorité: 19.09.2018 FR 1858488
(43) Date de publication de la demande: 25.03.2020
(73) Titulaire: TRANSDEV GROUP INNOVATION, 92130 Issy-les-Moulineaux (FR)
(72) Inventeur: LE CORNEC, Olivier, 91120 PALAISEAU (FR)
(74) Mandataire: Lavoix

(56) Documents cités:
- EP-A1- 3 363 698
- WO-A1-2013/150244
- DE-A1-102015 003 124
- MAGDICI SILVIA ET AL: "Fail-safe motion planning of autonomous vehicles", 2016 IEEE 19TH INTERNATIONAL CONFERENCE ON INTELLIGENT TRANSPORTATION SYSTEMS (ITSC), IEEE, 1 novembre 2016 (2016-11-01), pages 452-458, XP033028383, DOI: 10.1109/ITSC.2016.7795594

## Description

La présente invention concerne un dispositif de détermination d'une trajectoire d'arrêt d'urgence d'un véhicule autonome muni d'un module de conduite autonome, le véhicule autonome étant propre à stocker au préalable au moins une trajectoire prédéfinie de déplacement comprenant une pluralité de vecteurs de référence successifs associés respectivement à des tronçons distincts successifs de déplacement du véhicule autonome.

L'invention concerne également un véhicule autonome muni d'un module de conduite autonome muni d'un module de conduite autonome, le véhicule autonome étant propre à stocker au préalable au moins une trajectoire prédéfinie de déplacement comprenant une pluralité de vecteurs de référence successifs associés respectivement à des tronçons distincts successifs de déplacement du véhicule autonome, le véhicule autonome comprenant au moins un capteur de donnée de localisation du véhicule autonome.

L'invention concerne également un procédé de détermination d'une trajectoire d'arrêt d'urgence d'un véhicule autonome muni d'un module de conduite autonome, le véhicule autonome étant propre à stocker au préalable au moins une trajectoire prédéfinie de déplacement comprenant une pluralité de vecteurs de référence successifs associés respectivement à des tronçons distincts successifs de déplacement du véhicule autonome.

Actuellement, les dispositifs de détermination d'une trajectoire d'arrêt d'urgence d'un véhicule autonome, tels que notamment décrit dans le document DE 10 2015 003124 A1, activés, par exemple, en cas de défaillance du module de conduite autonome se fondent uniquement sur l'utilisation du dernier vecteur de déplacement du véhicule autonome (i.e. avant défaillance du module de conduite autonome) pour déterminer la trajectoire d'arrêt d'urgence et la consigne de déplacement automatique du véhicule autonome associée.

Une telle consigne déterminée par les dispositifs connus de détermination d'une trajectoire d'arrêt d'urgence d'un véhicule autonome correspond le plus souvent à la combinaison d'une instruction de direction de déplacement tangent à la trajectoire de déplacement du véhicule autonome préalable à la défaillance, et d'une instruction de décélération brutale provoquant une réduction de la vitesse instantanée du véhicule autonome à une valeur inférieure ou égale à 20km/h.

Le freinage automatique d'urgence obtenu est alors violent, inconfortable et peu sécurisé pour les passagers du véhicule autonome, d'autant plus si les passagers sont par exemple des passagers en posture debout au sein d'un véhicule autonome de transport collectif.

Par ailleurs, considérant la distance nécessaire pour arrêter le véhicule autonome, même si un freinage automatique brusque était appliqué, il est probable que la courbure de la voie sur laquelle le véhicule autonome se déplace change pendant cet arrêt et qu'en conséquence le véhicule autonome en vienne à sortir de la route, situation à risque, qui dans le cas classique d'un véhicule autonome dirigé manuellement a pour solution une reprise en main dévolue au conducteur.

Magdici et al décrit dans l'article intitulé « Fail safe motion planning of autonomous vehicles » du 1er Novembre 2016 IEEE 19th INTERNATIONAL CONFERENCE ON INTELLIGENT TRANSPORTATION YSTEMS (pages 452-458) décrit une génération de trajectoire pour un véhicule autonome hôte, à partir de deux trajectoires générées qui sont respectivement une trajectoire optimale de ce véhicule hôte et une manoeuvre d'urgence mais ne divulgue pas explicitement une détermination de trajectoire d'arrêt d'urgence.

Un objectif de l'invention est donc d'optimiser la trajectoire d'arrêt d'urgence et le freinage associé d'un véhicule autonome de sorte à améliorer la sécurité routière associée.

Un autre objectif de l'invention est, autant que faire se peut, de maintenir une vitesse de déplacement non nulle du véhicule autonome, notamment lorsque la défaillance du module de conduite autonome ou tout autre situation nécessitant un arrêt d'urgence se manifeste dans une zone de présence du véhicule autonome correspondant à une zone de conduite à risque caractérisée par la présence d'intersection(s), de piéton(s) ou d'autre(s) véhicule(s) autonome(s) ou non.

A cet effet, l'invention a pour objet un dispositif de détermination d'une trajectoire d'arrêt d'urgence tel que défini dans la revendication 1.

Ainsi, grâce à l'invention, la trajectoire d'arrêt d'urgence et la consigne de déplacement du véhicule autonome associées sont optimisées, car déterminées non seulement à partir du dernier vecteur de déplacement du véhicule autonome mais également à partir de la trajectoire prédéfinie ainsi que, pour chaque tronçon de cette trajectoire prédéfinie, à partir d'une donnée de localisation du véhicule autonome permettant une correction et une ré-optimisation en temps réel de l'arrêt d'urgence à chaque tronçon d'avancement du véhicule autonome.

Une telle optimisation mise en oeuvre par le dispositif de contrôle du freinage automatique d'urgence selon l'invention permet une décélération « douce » du véhicule autonome puisque la trajectoire est maitrisée/corrigée tronçon par tronçon pour éviter une déviation (i.e. un déport du véhicule autonome) de la trajectoire d'arrêt d'urgence supérieure à un seuil prédéterminé par rapport à la trajectoire prédéfinie suivie préalablement à la situation d'urgence nécessitant un arrêt d'urgence, telle qu'une défaillance du module de conduite autonome.

Par exemple, selon l'invention une décélération abaissant la valeur de la vitesse du véhicule autonome avant défaillance du module de conduite autonome de l'ordre de 70km/h à une valeur de l'ordre de 40 à 50km/h est obtenue tout en poursuivant le virage entamé avant défaillance, contre, pour les dispositifs de détermination d'une trajectoire d'arrêt d'urgence existants, une décélération, selon une direction tangente au virage, et brutale réduisant la vitesse à une valeur de 20km/h maximum.
- Selon des modes de réalisation particuliers de l'invention, le dispositif de détermination d'une trajectoire d'arrêt d'urgence présente également l'une ou plusieurs des caractéristiques, prise(s) isolément ou suivant toute(s) combinaison(s) techniquement possible(s), telles que définies dans les revendications 2 à 8

L'invention a également pour objet un véhicule autonome tel que défini dans la revendication 9.

L'invention a encore pour objet un procédé de détermination d'une trajectoire d'arrêt d'urgence tel que défini dans la revendication 10.

D'autres caractéristiques et avantages de l'invention apparaîtront à la lecture de la description qui va suivre, donnée uniquement à titre d'exemple et faite en se référant aux dessins annexés, dans lesquels :
- la figure 1 est une représentation schématique de la détermination d'une trajectoire d'arrêt d'urgence classiquement mis en oeuvre ;
- la figure 2 est une représentation schématique de la détermination d'une trajectoire d'arrêt d'urgence selon un mode de réalisation de la présente invention ;
- la figure 3 est une représentation schématique du déport d'un véhicule autonome par rapport à la trajectoire prédéfinie à suivre ;
- la figure 4 est un organigramme d'un procédé, selon l'invention, de détermination d'une trajectoire d'arrêt d'urgence selon la trajectoire d'arrêt d'urgence de la figure 2 ;
- la figure 5 illustre le déport latéral du véhicule autonome en fonction de la vitesse du véhicule autonome initiale précédant la mise en oeuvre du procédé selon l'invention et en fonction de l'erreur de cap propre à chaque véhicule autonome.

Dans la suite de la description, l'expression « sensiblement égal à » désigne une relation d'égalité à plus ou moins 10 %, de préférence à plus ou moins 5 %.

De plus, dans la suite par « dernier vecteur de déplacement réel du véhicule autonome mémorisé » et par « dernière donnée de localisation du véhicule autonome mémorisée » on entend le vecteur de déplacement réel et la donnée de localisation du véhicule autonome qui sont les plus récemment mémorisés par rapport à un instant courant de calcul d'une consigne de déplacement automatique du véhicule pour suivre une trajectoire d'arrêt d'urgence.

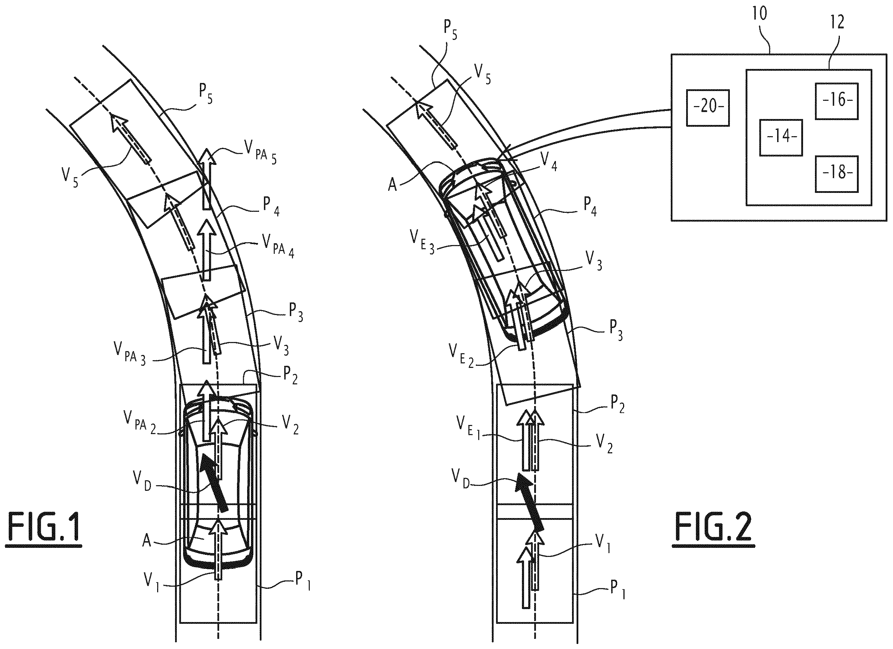

Sur la figure 1, on considère un véhicule autonome A, ici une automobile par exemple.

Le véhicule automobile A comprend, de manière connue, des roues arrière, des roues avant, un moteur (non représenté) relié mécaniquement via une chaîne de transmission (non représentée) aux roues arrière et/ou avant pour l'entraînement desdites roues en rotation autour de leur axe, un système de direction (non représenté), adapté pour agir sur les roues du véhicule A de manière à modifier l'orientation de sa trajectoire, et un système de freinage (non représenté), adapté pour exercer une force de freinage sur les roues du véhicule A.

Le véhicule automobile est typiquement constitué par un véhicule à traction et/ou propulsion électrique. A cet effet, le moteur (non représenté) est constitué par un moteur électrique, et le véhicule A comprend une batterie électrique (non représentée) raccordée électriquement au moteur pour l'alimentation du moteur en électricité.

Le véhicule automobile A étant un véhicule autonome comprend, à cet effet, un dispositif électronique de conduite autonome (non représenté) adapté pour piloter le véhicule de manière autonome en recevant des informations sur l'environnement du véhicule par l'intermédiaire de capteurs (non représentés) et en agissant sur le moteur, le système de direction et le système de freinage, de manière à modifier la vitesse, l'accélération et la trajectoire du véhicule en réaction aux informations reçues.

Classiquement, le véhicule autonome A se déplace sur une route dont le tracé constitue une trajectoire prédéfinie propre à être stockée au sein du véhicule autonome A. Une telle trajectoire prédéfinie de déplacement comprend une pluralité de vecteurs de référence V₁, V₂, V₃, V₄, V₅ associés respectivement à des tronçons P₁, P₂, P₃, P₄, P₅ distincts successifs. En d'autres termes, sur le tronçon P₁, en situation nominale, le véhicule autonome A est propre à suivre sensiblement le vecteur V₁ tandis que sur la portion de virage P₄ le véhicule autonome A est propre à suivre sensiblement le vecteur V4.

En relation avec la figure 1, la trajectoire d'arrêt d'urgence suivie classiquement par un véhicule autonome A, pour freiner automatiquement en présence d'une instruction d'arrêt d'urgence, est établie à partir du dernier vecteur V_{D} de déplacement réel du véhicule autonome A. Un tel dernier vecteur V_{D} de déplacement réel du véhicule autonome A est déterminé préalablement à la génération de l'instruction d'arrêt d'urgence pour obtenir un déplacement cohérent avec le dernier vecteur V_{D} de déplacement réel du véhicule préalable à la génération de l'instruction d'arrêt d'urgence, correspondant sur la figure 1 à un déplacement tangent à la trajectoire prédéfinie . Sur la figure 1, la génération de l'instruction d'arrêt d'urgence a lieu au cours du parcours du tronçon P₂ et correspond par exemple à la présence d'une défaillance du module de conduite autonome.

La trajectoire d'arrêt d'urgence, obtenue classiquement à partir dernier vecteur V_{D} de déplacement réel du véhicule autonome A, est composée pour le tronçon P₂ par le vecteur V_{PA2}, pour le tronçon P₃ par le vecteur V_{PA3}, pour le tronçon P₄ par le vecteur V_{PA4}, sorte que le déplacement automatique résultant est tangent au virage et provoque une sortie de route.

Par ailleurs, une telle trajectoire d'arrêt d'urgence propre à engendrer une sortie de route en cas de virage est accompagnée d'une décélération brutale provoquant une réduction de la vitesse instantanée du véhicule autonome à une valeur inférieure ou égale à 20km/h.

Sur la figure 2, le dispositif 10 électronique de détermination d'une trajectoire d'arrêt d'urgence selon la présente invention est représenté ainsi que la trajectoire d'arrêt d'urgence obtenue par ce dispositif dans une situation identique à celle de la figure 1.

Dans l'exemple de la figure 2, le dispositif 10 électronique de détermination d'une trajectoire d'arrêt d'urgence comprend une unité de traitement d'information (non représentée) formée par exemple d'une mémoire 12 et d'un processeur (non représenté) associé à la mémoire 12. La mémoire 12 est propre à stocker la trajectoire prédéfinie de déplacement du véhicule autonome A comprenant une pluralité de vecteurs de référence V₁, V₂, V₃, V₄, V₅ associés respectivement à des tronçons P₁, P₂, P₃, P₄, P₅.

Le dispositif 10 électronique de détermination d'une trajectoire d'arrêt d'urgence comprend en outre un module de calcul 14 d'au moins une consigne de déplacement automatique du véhicule autonome A pour suivre une trajectoire d'arrêt d'urgence comprenant une pluralité de vecteurs successifs d'arrêt d'urgence V_{E1}, V_{E2}, V_{E3} associés chacun à un tronçon P₂, P₃, P₄ distinct d'une partie des tronçons successifs de la trajectoire prédéfinie, à partir au moins, pour chaque vecteur d'arrêt d'urgence V_{E1}, V_{E2}, VE3 :
∘ d'un dernier vecteur de déplacement réel du véhicule autonome A mémorisé,
∘ de la trajectoire prédéfinie de déplacement du véhicule autonome, et
∘ d'une dernière donnée de localisation POS_A du véhicule autonome A mémorisée et délivrée par au moins un capteur du véhicule autonome.

Par ailleurs, le dispositif 10 comprend un module de pilotage d'urgence 16 propre à diriger le véhicule autonome selon ladite au moins une consigne déterminée par le module de calcul 14.

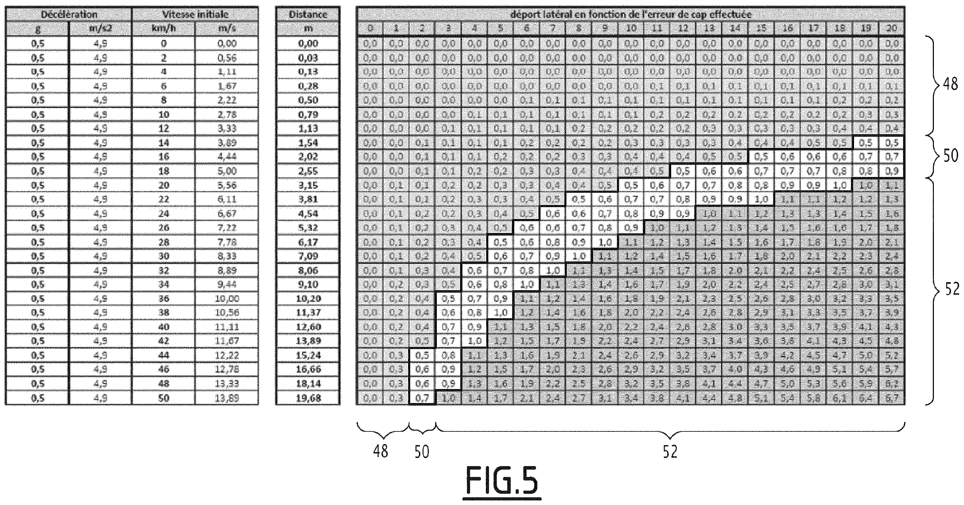

En particulier, la consigne de déplacement comprend au moins une instruction représentative d'une direction à suivre (i.e. les vecteurs successifs d'arrêt d'urgence V_{E1}, V_{E2}, V_{E3}), et/ou une instruction représentative d'une vitesse de déplacement instantanée correspondant par exemple à une force de décélération (i.e. une force de freinage) à appliquer, ou directement à la vitesse de déplacement que le véhicule autonome A doit mettre en oeuvre tel que décrit ultérieurement en relation avec la figure 5.

Selon un aspect particulier, la donnée de localisation POS_A est une donnée de coordonnée curviligne comprenant une abscisse et une ordonnée curvilignes du véhicule autonome A définie dans un référentiel prédéfini tel qu'un référentiel terrestre. Une telle donnée est délivrée par au moins un capteur du véhicule autonome A appartenant au groupe comprenant :
- un odomètre propre à calculer le déplacement du véhicule autonome A d'un tronçon à l'autre en fonction du nombre de rotation des roues,
- un équipement de géolocalisation configuré pour déterminer la position du véhicule autonome A,
- un dispositif de détermination du cap courant du véhicule autonome A configuré par exemple pour estimer le cap du véhicule en fonction de l'angle du système de direction par rapport à une position de référence prédéterminée (e.g. le système de direction comprend un volant dont l'angle de rotation par rapport à la position de référence prédéterminée est représentative du cap du véhicule autonome A),
- une centrale inertielle (de l'anglais *Inertial Measurement Unit*)*,* combinant une pluralité d'accéléromètres et de gyroscopes, propre à délivrer précisément (i.e. avec une précision supérieure à un seuil prédéterminé) les estimations de cap et de vitesse instantanée du véhicule autonome A en utilisant notamment les données d'accélération, les vitesses de rotation, voire les variations de champ magnétique environnant le véhicule autonome A.

Selon un premier aspect, pour chaque tronçon considéré de la trajectoire d'arrêt d'urgence auquel est respectivement associé un vecteur d'arrêt d'urgence V_{E1}, V_{E2}, V_{E3}, le module de calcul 14 est configuré pour déterminer la consigne de déplacement du véhicule autonome A propre à rendre les vecteurs d'arrêt d'urgence V_{E1}, V_{E2}, V_{E3} associés respectivement aux tronçons P₂ P₃, P₄ considérés sensiblement colinéaires aux vecteurs de référence V₂, V₃, V₄ associés respectivement aux mêmes tronçons P₂, P₃, P₄ considérés de la trajectoire prédéfinie, à partir du dernier vecteur de déplacement réel du véhicule autonome A et de ladite au moins une donnée de localisation POS_A associés au tronçon précédent le tronçon considéré.

Plus précisément, pour le premier tronçon P₂ de la trajectoire d'arrêt d'urgence, le module de calcul 14 est configuré pour déterminer la consigne de déplacement du véhicule autonome A propre à rendre le premier vecteur d'arrêt d'urgence V_{E1} associé audit premier tronçon P₂ considéré colinéaire au vecteur de référence V₂ associé à ce même premier tronçon P₂, au moins à partir du dernier vecteur de déplacement réel V_{D} du véhicule autonome A et de la dernière donnée de localisation du véhicule autonome A mémorisés à un instant précédant la réception, ou à titre d'alternative, à un instant la génération de l'instruction d'arrêt d'urgence.

En d'autres termes, la consigne de déplacement comprend au moins l'instruction de déplacement qui permet au véhicule de passer de la direction de déplacement V_{D} à la direction de déplacement V_{E1} colinéaire au vecteur V₁ de la trajectoire prédéfinie, et ainsi de suite tronçon par tronçon de sorte que la trajectoire d'arrêt d'urgence, selon l'invention telle que représentée sur la figure 2, et composée au moins des vecteurs d'arrêt d'urgence V_{E1}, V_{E2}, V_{E3} « suit » le virage de la route empruntée par le véhicule autonome A au lieu de sortir de la route tel qu'obtenu auparavant classiquement tel qu'illustré par la figure 1.

Le dispositif 10 électronique de détermination d'une trajectoire d'arrêt d'urgence permet ainsi l'engagement d'une manoeuvre à risque minimal (MRM de l'anglais, *Minimal Risk Maneuver*)*.*

Une telle consigne est par exemple déterminée au moyen d'une table de référence stockée au sein de la mémoire 12 du dispositif électronique de détermination d'une trajectoire d'arrêt d'urgence, de même que la trajectoire prédéfinie de déplacement.

Une telle table de référence est propre à associer à chaque localisation du véhicule autonome A sur la trajectoire prédéfinie la direction à suivre par le véhicule autonome et la vitesse de déplacement et/ou la décélération à appliquer au véhicule autonome en tenant compte dernier vecteur de déplacement réel mémorisé pour ce véhicule autonome A.

En complément facultatif, une telle table de référence associe également à chaque localisation un indicateur représentatif d'un niveau de dangerosité de la localisation, par exemple pour signaler la présence d'une intersection, d'un cul de sac, d'une zone à forte densité piétonnière etc.

Selon une autre variante, une telle table de référence est propre à prendre en compte un paramètre intrinsèque représentatif du temps de latence du système de freinage propre au véhicule autonome A, ce temps de latence correspondant à l'intervalle entre la transmission d'instruction au système de freinage et le freinage effectif correspondant.

Une telle capacité à rester sur la trajectoire prédéfinie permet en outre une optimisation de la vitesse d'arrêt d'urgence qui permet d'éviter une décélération brusque puisque la trajectoire d'arrêt classiquement utilisée représentée sur la figure 1 et menant à une sortie de route est évitée.

Selon un aspect particulier, le module de calcul 14 est propre à prendre en compte une trajectoire prédéfinie où les tronçons P₁, P₂, P₃, P₄, P₅ se chevauchent. Cet aspect permet notamment d'augmenter la précision de la trajectoire d'arrêt d'urgence afin que les données de localisation successives du véhicule autonome, par exemple les coordonnées curvilignes du véhicule autonome A associées à chaque tronçon forment une courbe sensiblement continue (en prenant en compte une discrétisation de l'ordre de la dizaine de milliseconde dépendant de la forme de la trajectoire).

En complément optionnel, le dispositif 10 comprend un module de réception 18 d'une instruction d'arrêt d'urgence provoquant l'activation des autres modules de calcul 14 et de pilotage d'urgence 16 qu'il comprend.

Selon un premier exemple, l'instruction d'arrêt d'urgence est, par exemple, émise par une plateforme externe de supervision (non représentée) d'un ensemble de véhicules autonomes auquel le véhicule autonome A appartient, en cas de détection d'un évènement prédéterminé dont le type appartient au groupe comprenant : un type d'évènement météorologique, tel que du brouillard, du verglas, de la neige, de la pluie, du vent ; une densité anormale d'éléments de trafic ; et un type d'attaque, tel qu'une cyberattaque, une attaque terroriste.

Selon un deuxième exemple, l'instruction d'arrêt d'urgence est par exemple émise par le module de conduite autonome du véhicule autonome A en cas d'auto-détection (i.e. par le module de conduite autonome lui-même) d'une défaillance de celui-ci.

A titre d'alternative au module de réception 18 (non représentée), le dispositif 10 comprend en outre un module de détection de défaillance du module de conduite autonome, pour un tronçon P₂ de déplacement considéré, par détermination d'un écart supérieur à un seuil prédéterminé entre le vecteur de déplacement réel du véhicule autonome A et le vecteur de référence associés au tronçon considéré, le module de détection de défaillance étant propre à activer, par génération et transmission de l'instruction d'arrêt d'urgence, le module de calcul 14 en cas de défaillance du module de conduite autonome détectée.

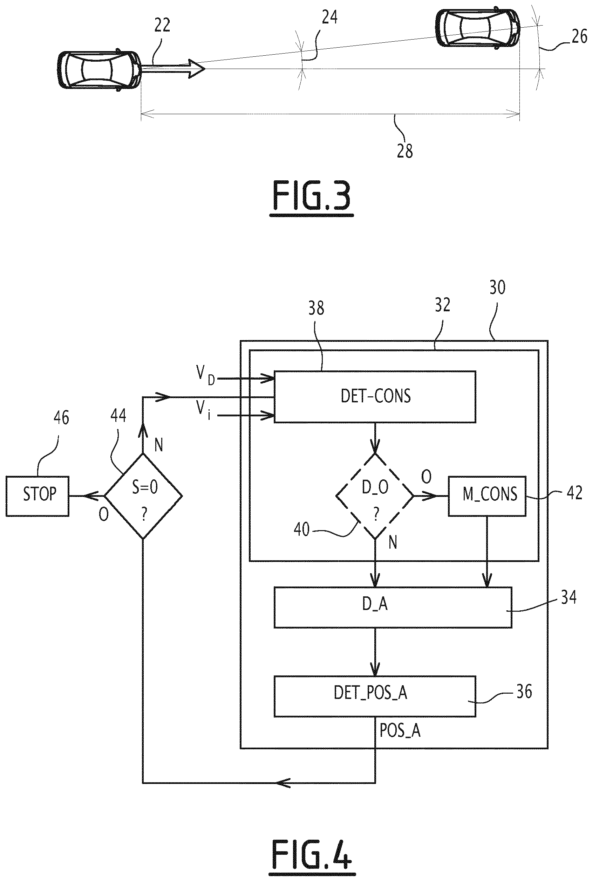

Le seuil prédéterminé correspond, par exemple, à une valeur maximale de déport latéral du véhicule par rapport à la trajectoire prédéfinie tel qu'illustré par la figure 3 décrite par la suite.

Autrement dit, selon cette alternative, le dispositif 10 électronique de détermination d'une trajectoire d'arrêt d'urgence est également propre à surveiller et à détecter une anomalie de fonctionnement du module de conduite autonome du véhicule autonome, et assume ainsi une double fonction.

Dans l'exemple de la figure 2, le module de calcul 14, le module de pilotage d'urgence 16 et, optionnellement, le module de réception 18 sont réalisés chacun sous forme d'un logiciel, ou d'une brique logicielle, exécutables par le processeur.

La mémoire 12 du dispositif 10 électronique de détermination d'une trajectoire d'arrêt d'urgence est alors apte à stocker un logiciel de réception configuré pour recevoir l'instruction d'arrêt d'urgence, par exemple, émise par une plateforme externe de supervision, un logiciel de calcul configuré pour calculer la consigne de déplacement automatique du véhicule autonome A pour suivre la trajectoire d'arrêt d'urgence à partir au moins, pour chaque vecteur d'arrêt d'urgence V_{E1}, V_{E2}, V_{E3} formant la trajectoire d'arrêt d'urgence :
∘ d'un dernier vecteur de déplacement réel du véhicule autonome A mémorisé,
∘ de la trajectoire prédéfinie de déplacement du véhicule autonome, et
∘ d'une dernière donnée de localisation du véhicule autonome A mémorisée, et délivrée par au moins un capteur du véhicule autonome A.
et un logiciel de pilotage d'urgence propre à diriger le véhicule autonome A selon la consigne de déplacement automatique en transmettant des instructions correspondantes au moteur, au système de direction et au système de freinage du véhicule autonome A de manière à modifier la vitesse, l'accélération et la trajectoire du véhicule autonome A en réaction aux informations reçues. Le processeur (non représenté) du dispositif 10 est alors apte à exécuter chacun des logiciels parmi le logiciel de réception, le logiciel de calcul et le logiciel de pilotage d'urgence.

En variante non représentée, le module de calcul 14, le module de pilotage d'urgence 16 et, optionnellement, le module de réception 18 sont réalisés chacun sous forme d'un composant logique programmable, tel qu'un FPGA (de l'anglais *Field Programmable Gate Array*)*,* ou encore sous forme d'un circuit intégré dédié, tel qu'un ASIC (de l'anglais *Application Spécifie Integrated Circuit*)*.*

Lorsque le dispositif électronique de détermination d'une trajectoire d'arrêt d'urgence est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

Selon un aspect complémentaire, le dispositif électronique de détermination d'une trajectoire d'arrêt d'urgence 10 est enrichi d'un module d'évitement d'obstacle 20 sur la trajectoire d'arrêt d'urgence propre à communiquer avec le module de calcul 14 d'au moins une consigne de déplacement automatique du véhicule autonome A, le module de calcul 14 étant propre à adapter la consigne en fonction de la détection d'obstacle.

Plus précisément, le module d'évitement d'obstacle 20 est propre à mettre en oeuvre un traitement de donnée(s) délivrée(s) par au moins un capteur embarqué à bord du véhicule autonome A appartenant au groupe comprenant :
- un équipement de géolocalisation,
- un lidar,
- une caméra,
- un odomètre,
- dispositif de détermination d'un cap courant du véhicule autonome (A),
- une centrale inertielle.

En particulier, en présence d'un obstacle détecté, le module d'évitement d'obstacle 20 est propre à modifier un ou plusieurs élément(s) de la consigne de déplacement, à savoir modifier l'instruction représentative de la direction à suivre et/ou modifier l'instruction représentative de la vitesse de déplacement instantanée.

Par exemple, préalablement à la détection d'obstacle, le véhicule autonome A se déplace selon l'invention sur le tronçon P₂ selon la direction du vecteur d'arrêt d'urgence V_{E1} avec une vitesse de 40km/h. Le lidar (non représenté) du véhicule autonome A détecte un piéton sur le tronçon P₃ et la position précise (i.e. ses coordonnées curvilignes) POS_P de ce piéton sur ce tronçon P₃. En l'absence d'obstacle, et en utilisant la table de référence, le véhicule autonome A se serait déplacé avec la même vitesse de 40km/h et selon le vecteur d'arrêt d'urgence V_{E3} dirigeant le véhicule autonome A vers le piéton P.

En présence du piéton détecté, le module d'évitement d'obstacle 20 utilise la position POS_P pour déterminer la distance séparant le véhicule autonome A du piéton P et la décélération à appliquer pour s'arrêter avant l'obstacle et/ou, si la trajectoire prédéfinie le permet, le vecteur d'arrêt d'urgence V_{E3m-eo} à appliquer pour éviter un impact entre piéton et véhicule autonome tout en ayant une vitesse non nulle.

Selon la figure 2, le dispositif électronique de détermination d'une trajectoire d'arrêt d'urgence 10 précité est embarqué à bord du véhicule autonome A.

Selon une alternative (non représentée), le dispositif électronique de détermination d'une trajectoire d'arrêt d'urgence 10 précité est logé au sein d'une plateforme externe de supervision distante du véhicule autonome et propre à communiquer les instructions de pilotage établies par le module de pilotage d'urgence à un récepteur du véhicule autonome A propre à retransmettre ces instructions au moteur, au système de direction et au système de freinage du véhicule autonome de manière à modifier la vitesse, l'accélération et la trajectoire du véhicule autonome A en réaction aux informations reçues.

La figure 3 est une représentation schématique du déport d'un véhicule autonome A par rapport à la trajectoire prédéfinie à suivre. Plus précisément, on considère un véhicule autonome A se dirigeant selon une direction de déplacement 22 avec une vitesse Vᵢ. Chaque véhicule autonome est caractérisé par un autre paramètre intrinsèque d'erreur de cap 24 généralement exprimé en degré qui représente l'angle entre la trajectoire prédéfinie et le déport latéral 26 maximal autorisé du véhicule par rapport à la trajectoire prédéfinie.

Par exemple, si l'on considère une voie dont la largeur de chaussée est de 3 mètres et un véhicule de 2 mètres de large, le déport latéral maximal 26 est de 50 centimètres.

En tenant compte, de la vitesse Vᵢ, de la position POS_A du véhicule A, de l'erreur de cap 24 et du déport maximal autorisé, la distance d'arrêt 28 est obtenue. Augmenter la vitesse Vᵢ du véhicule autonome A diminue la distance d'arrêt 28 et inversement.

Le fonctionnement du dispositif électronique de détermination d'une trajectoire d'arrêt d'urgence 10 selon l'invention va désormais être expliqué à l'aide de la figure 4 représentant un organigramme du procédé 30, selon l'invention, de détermination d'une trajectoire d'arrêt d'urgence, le procédé 30 étant mis en oeuvre par le dispositif électronique de surveillance 10.

Lors d'une étape initiale 32, le dispositif électronique de détermination d'une trajectoire d'arrêt d'urgence 10 calcule, via le module de calcul 14, au moins une consigne de déplacement automatique du véhicule autonome A pour suivre une trajectoire d'arrêt d'urgence comprenant une pluralité de vecteurs successifs d'arrêt d'urgence V_{E1}, V_{E2}, V_{E3} associés chacun à un tronçon P₂, P₃, P₄ distinct d'une partie des tronçons successifs de la trajectoire prédéfinie, à partir au moins, pour chaque vecteur d'arrêt d'urgence V_{E1}, V_{E2}, V_{E3} :
∘ d'un dernier vecteur de déplacement réel du véhicule autonome A mémorisé,
∘ de la trajectoire prédéfinie de déplacement du véhicule autonome, et
∘ d'une dernière donnée de localisation POS_A du véhicule autonome A mémorisée, et délivrée par au moins un capteur du véhicule autonome A,

Le dispositif électronique de détermination d'une trajectoire d'arrêt d'urgence 10 pilote ensuite, lors de l'étape 34, via son module de pilotage d'urgence 16 le véhicule autonome A en le dirigeant selon ladite au moins une consigne.

Puis, lors de l'étape 36, le dispositif électronique de détermination d'une trajectoire d'arrêt d'urgence 10 détermine la position POS_A résultant de l'application de la consigne.

Selon un aspect complémentaire et optionnel, au cours de l'étape de calcul 32, le dispositif électronique de détermination d'une trajectoire d'arrêt d'urgence 10 détermine lors de la sous-étape 38 la consigne précitée, puis au cours d'une sous-étape 40 détermine la présence(O)/absence(N) d'obstacle sur la trajectoire d'arrêt d'urgence résultant de l'application de la consigne.

En présence O d'un obstacle, le dispositif électronique de détermination d'une trajectoire d'arrêt d'urgence 10 détermine lors de la sous-étape 42 une consigne modifiée de sorte à arrêter le véhicule avant l'obstacle et/ou à modifier sa trajectoire pour contourner l'obstacle.

En absence N d'obstacle, le dispositif électronique de détermination d'une trajectoire d'arrêt d'urgence 10 passe de la sous-étape de détermination de la présence(O)/absence(N) d'obstacle à l'étape de pilotage 34 précitée sans modification de la consigne.

Le procédé 30 selon l'invention est un procédé itératif, les étapes précitées étant répétées pour chaque tronçon P₂, P₃, P₄ de la trajectoire d'arrêt d'urgence, tant qu'au cours d'une étape 44, le dispositif 10 n'a pas déterminé que l'état S du véhicule autonome était à l'arrêt (valeur nulle), la sous-étape de détermination 38 utilisant à chaque itération le dernier vecteur déplacement et la dernière position (i.e. localisation) du véhicule autonome mémorisé à l'itération précédente associée au tronçon précédent l'instant de calcul courant.

En présence de cet état à l'arrêt (=0) déterminé lors de l'étape 44, le dispositif 10 restitue, lors d'une étape 46, une information représentative de l'arrêt du véhicule.

Le déport latéral du véhicule autonome A en fonction de la vitesse du véhicule autonome Vᵢ précédant la défaillance du module de conduite autonome et en fonction de l'erreur de cap propre à chaque véhicule autonome est représenté sur la figure 5.

L'ensemble de données indiqué à titre d'exemple dans la figure 5 est par exemple incorporé dans la table de référence précitée pour déterminer la consigne de déplacement automatique à appliquer notamment l'instruction représentative d'une vitesse de déplacement instantanée correspondant par exemple à une force de décélération (i.e. une force de freinage) à appliquer, ou directement à la vitesse de déplacement que le véhicule autonome A doit mettre en oeuvre.

Un tel ensemble de données illustré par la figure 5 est par exemple réparti en trois zones associée aux valeurs de déport latéral 26, à savoir une zone 48 où le déport latéral obtenu est acceptable, une zone 50 où le déport latéral n'est plus acceptable mais présente un risque mineur, et une zone 52 où le déport latéral n'est plus acceptable et présente un risque majeur.

Ainsi, un véhicule autonome A présentant une caractéristique intrinsèque d'erreur de cap de 20°, une vitesse initiale de 12km/h et utilisant une décélération de 0,5g dispose d'une distance d'arrêt de 1,13 mètre pour rester en dessous du déport latéral maximal autorisé égal à 50 centimètres si l'on considère une voie dont la largeur de chaussée est de 3 mètres et un véhicule de 2 mètres de large.

De la même manière, un véhicule autonome A présentant une caractéristique intrinsèque d'erreur de cap de 1°, une vitesse initiale de 50km/h et utilisant une décélération de 0,5g dispose d'une distance d'arrêt de 19,68 mètre pour rester en dessous du déport latéral maximal autorisé égal à 50 centimètres.

Le dispositif électronique de détermination d'une trajectoire d'arrêt d'urgence 10 selon l'invention permet alors d'optimiser l'arrêt d'urgence d'un point de vue performance en évitant notamment une sortie de route, et également lorsque cela est possible d'un point de vue confort des passagers en adaptant le niveau de décélération en fonction de la trajectoire prédéfinie et de sa position sur cette trajectoire prédéfinie, de la vitesse initiale du véhicule autonome A et de son vecteur V_{D} de déplacement mémorisé préalablement à l'instruction d'arrêt d'urgence, et optionnellement en présence d'un obstacle.

L'homme du métier observera notamment que le dispositif électronique de détermination d'une trajectoire d'arrêt d'urgence 10 selon l'invention permet de continuer à faire avancer le véhicule à très basse vitesse (e.g. à 5 km/h) au cas où la zone où se situe le véhicule autonome A soit réputée dangereuse (afin d'éviter par exemple un arrêt au milieu d'une intersection par exemple) tel qu'indiqué, par exemple, au moyen d'un indicateur prédéterminé dans la table de référence pour la position du véhicule autonome A.

L'homme du métier notera par ailleurs que le dispositif électronique de détermination d'une trajectoire d'arrêt d'urgence 10 selon l'invention est, selon une version améliorée, propre à être enrichi d'un module d'évitement d'obstacle 20 propre à contourner un obstacle en cours de freinage, tout en garantissant que le véhicule autonome A reste sur la trajectoire prédéfinie.

Selon une autre version améliorée, le dispositif électronique de détermination d'une trajectoire d'arrêt d'urgence 10 selon l'invention est, propre à être enrichi d'un module de détection du module de conduite autonome qu'il comprend afin de pallier immédiatement cette défaillance en prenant le relais de pilotage du véhicule autonome sur une trajectoire d'arrêt d'urgence optimisée en temps réel et sécurisée.

On conçoit ainsi que le dispositif électronique de détermination d'une trajectoire d'arrêt d'urgence d'un véhicule autonome 10 selon l'invention, et le procédé associé, permettent d'améliorer encore la sécurité des passagers à bord de tels véhicules automobiles autonomes A.

## Revendications

1. Dispositif (10) électronique de détermination d'une trajectoire d'arrêt d'urgence d'un véhicule autonome (A) muni d'un module de conduite autonome, le véhicule autonome (A) étant propre à stocker au préalable au moins une trajectoire prédéfinie de déplacement comprenant une pluralité de vecteurs de référence (V₁, V₂, V₃, V₄, V₅) successifs associés respectivement à des tronçons (P₁, P₂, P₃, P₄, P₅) distincts successifs de déplacement du véhicule autonome (A),
**caractérisé en ce que** le dispositif (10) électronique de détermination d'une trajectoire d'arrêt d'urgence est propre à déterminer une trajectoire d'arrêt d'urgence comprenant une pluralité de vecteurs successifs d'arrêt d'urgence (V_{E1}, V_{E2}, V_{E3}) associés chacun à un tronçon (P₂, P₃, P₄) distinct d'une partie des tronçons successifs de la trajectoire prédéfinie, à partir au moins, pour chaque vecteur d'arrêt d'urgence (V_{E1}, V_{E2}, V_{E3}) :
∘ d'un dernier vecteur de déplacement réel du véhicule autonome (A) mémorisé,
∘ de la trajectoire prédéfinie de déplacement du véhicule autonome, et
∘ d'une dernière donnée de localisation du véhicule autonome (A) mémorisée, et délivrée par au moins un capteur du véhicule autonome (A),
le dispositif (10) électronique de détermination d'une trajectoire d'arrêt d'urgence étant automatiquement activable en présence d'une instruction d'arrêt d'urgence,
et comprend :
- un module de calcul (14) d'au moins une consigne de déplacement automatique du véhicule autonome (A) pour suivre ladite trajectoire d'arrêt d'urgence,
- un module de pilotage d'urgence (16) propre à diriger le véhicule autonome (A) selon ladite au moins une consigne,
une instruction d'arrêt d'urgence provoquant l'activation du module de calcul (14).

2. Dispositif (10) selon la revendication 1, dans lequel, pour chaque tronçon considéré de la trajectoire d'arrêt d'urgence auquel est respectivement associé un vecteur d'arrêt d'urgence (V_{E1}, V_{E2}, V_{E3}), le module de calcul (14) est configuré pour déterminer la consigne de déplacement du véhicule autonome (A) propre à rendre le vecteur d'arrêt d'urgence (V_{E1}, V_{E2}, V_{E3}) associé audit tronçon (P₂, P₃, P₄) considéré sensiblement colinéaire au vecteur de référence (V₂, V₃, V₄) associé au même tronçon (P₂, P₃, P₄) considéré de la trajectoire prédéfinie, à partir du dernier vecteur de déplacement réel du véhicule autonome (A) et de ladite au moins une donnée de localisation associés au tronçon précédant le tronçon considéré.

3. Dispositif selon la revendication 2, dans lequel, pour le premier tronçon (P₂) de la trajectoire d'arrêt d'urgence, le module de calcul (14) est configuré pour déterminer la consigne de déplacement du véhicule autonome (A) propre à rendre le premier vecteur d'arrêt d'urgence (V_{E1}) associé audit premier tronçon (P₂) considéré colinéaire au vecteur de référence (V₂) associé à ce même premier tronçon (P₂), au moins à partir du dernier vecteur de déplacement réel V_{D} du véhicule autonome A et de la dernière donnée de localisation du véhicule autonome A mémorisés à un instant précédant la réception, ou la génération, de l'instruction d'arrêt d'urgence.

4. Dispositif selon l'une quelconque des revendications précédentes, dans lequel le module de calcul (14) est propre à prendre en compte une trajectoire prédéfinie où les tronçons (P₁, P₂, P₃, P₄, P₅) se chevauchent.

5. Dispositif selon l'une quelconque des revendications précédentes, dans lequel la consigne de déplacement comprend au moins :
- une instruction représentative d'une direction à suivre, et/ou
- une instruction représentative d'une vitesse de déplacement instantanée.

6. Dispositif (10) selon l'une quelconque des revendications précédentes, comprenant en outre un module de détection de défaillance du module de conduite autonome, pour un tronçon (P₂) de déplacement considéré, par détermination d'un écart supérieur à un seuil prédéterminé entre le vecteur de déplacement réel du véhicule autonome (A) et le vecteur de référence associés au tronçon considéré et/ou par détermination de la position du véhicule en dehors de sa propre zone de circulation autorisée, le module de détection de défaillance étant propre à activer le module de calcul (14) en cas de défaillance du module de conduite autonome détectée.

7. Dispositif (10) selon l'une quelconque des revendications précédentes, comprenant en outre un module d'évitement d'obstacle (20) sur la trajectoire d'arrêt d'urgence propre à communiquer avec le module de calcul (14) d'au moins une consigne de déplacement automatique du véhicule autonome (A), le module de calcul (14) étant propre à adapter la consigne en fonction de la détection d'obstacle.

8. Dispositif (10) selon la revendication 7 dans lequel le module d'évitement d'obstacle (20) est propre à mettre en oeuvre un traitement de donnée(s) délivrée(s) par au moins un capteur embarqué à bord du véhicule autonome (A) appartenant au groupe comprenant :
- un équipement de géolocalisation,
- un lidar,
- une caméra,
- un odomètre,
- dispositif de détermination d'un cap courant du véhicule autonome (A),
- une centrale inertielle.

9. Véhicule autonome muni d'un module de conduite autonome, le véhicule autonome (A) étant propre à stocker au préalable au moins une trajectoire prédéfinie de déplacement comprenant une pluralité de vecteurs de référence successifs associés respectivement à des tronçons distincts successifs de déplacement du véhicule autonome (A), le véhicule autonome (A) comprenant au moins un capteur de donnée de localisation du véhicule autonome (A),
**caractérisé en ce que** le véhicule (A) autonome comprend au moins en outre un dispositif (10) de détermination d'une trajectoire d'arrêt d'urgence selon la revendication 1.

10. Procédé de détermination d'une trajectoire d'arrêt d'urgence (30) d'un véhicule autonome (A) muni d'un module de conduite autonome, le véhicule autonome (A) étant propre à stocker au préalable au moins une trajectoire prédéfinie de déplacement comprenant une pluralité de vecteurs de référence successifs associés respectivement à des tronçons distincts successifs de déplacement du véhicule autonome,
le procédé de détermination d'une trajectoire d'arrêt d'urgence (30) étant mis en oeuvre par le dispositif électronique de surveillance selon l'une quelconque des revendications 1 à 8, le procédé comprenant la détermination d'une trajectoire d'arrêt d'urgence comprenant une pluralité de vecteurs successifs d'arrêt d'urgence (V_{E1}, V_{E2}, V_{E3}) associés chacun à un tronçon (P₂, P₃, P₄) distinct d'une partie des tronçons successifs de la trajectoire prédéfinie, à partir au moins, pour chaque vecteur d'arrêt d'urgence (V_{E1}, V_{E2}, V_{E3}) :
∘ d'un dernier vecteur de déplacement réel du véhicule autonome (A) mémorisé,
∘ de la trajectoire prédéfinie de déplacement du véhicule autonome, et
∘ d'une dernière donnée de localisation du véhicule autonome (A) mémorisée, et délivrée par au moins un capteur du véhicule autonome (A),
le procédé comprenant en outre :
- le calcul (32) d'au moins une consigne de déplacement automatique du véhicule autonome (A) pour suivre ladite trajectoire d'arrêt d'urgence le pilotage d'urgence (34) du véhicule autonome (A) en dirigeant le véhicule autonome (A) selon ladite au moins une consigne,
une instruction d'arrêt d'urgence provoquant l'activation d'un module de calcul (14) mettant en oeuvre ledit calcul (32).

## Patentansprüche

1. Elektronische Vorrichtung (10) zum Bestimmen einer Nothalttrajektorie eines selbstfahrenden Fahrzeugs (A), das mit einem Modul für autonomes Fahren versehen ist, wobei das selbstfahrende Fahrzeug (A) geeignet ist, um im Vorfeld mindestens eine vordefinierte Bewegungstrajektorie zu speichern, umfassend eine Vielzahl von aufeinanderfolgenden Referenzvektoren (V₁, V₂, V₃, V₄, V₅), die jeweils mit aufeinanderfolgenden unterschiedlichen Abschnitten (P₁, P₂, P₃, P₄, P₅) der Bewegung des selbstfahrenden Fahrzeugs (A) assoziiert sind,
**dadurch gekennzeichnet, dass** die elektronische Vorrichtung (10) zum Bestimmen einer Nothalttrajektorie geeignet ist, um eine Nothalttrajektorie zu bestimmen, umfassend eine Vielzahl von aufeinanderfolgenden Nothaltvektoren (V_{E1}, V_{E2}, V_{E3}), die jeweils mit einem Abschnitt (P₂, P₃, P₄) assoziiert sind, der von einem Teil der aufeinanderfolgenden Abschnitte der vordefinierten Trajektorie verschieden ist, für jeden Nothaltvektor (V_{E1}, V_{E2}, V_{E3}) ausgehend von mindestens:
o einem zuletzt gespeicherten Vektors der tatsächlichen Bewegung des selbstfahrenden Fahrzeugs (A),
o der vordefinierten Bewegungstrajektorie des selbstfahrenden Fahrzeugs, und
o letzten Lokalisierungsdaten des selbstfahrenden Fahrzeugs (A), die von mindestens einem Sensor des selbstfahrenden Fahrzeugs (A) geliefert werden,
wobei die elektronische Vorrichtung (10) zum Bestimmen einer Nothalttrajektorie bei Vorliegen einer Nothaltanweisung automatisch aktivierbar ist,
und Folgendes umfasst:
- ein Modul (14) zum Berechnen mindestens einer automatischen Bewegungsvorgabe des selbstfahrenden Fahrzeugs (A), um der Nothalttrajektorie zu folgen,
- ein Notfallsteuermodul (16), das geeignet ist, um das selbstfahrende Fahrzeug (A) gemäß der mindestens einen Anweisung zu steuern,
eine Nothaltanweisung, die die Aktivierung des Rechenmoduls (14) bewirkt.

2. Vorrichtung (10) nach Anspruch 1, wobei für jeden betrachteten Abschnitt der Nothalttrajektorie, mit dem jeweils ein Nothaltvektor (V_{E1}, V_{E2}, V_{E3}) assoziiert ist, das Rechenmodul (14) konfiguriert ist, um die Bewegungsvorgabe des selbstfahrenden Fahrzeugs (A) zu bestimmen, die geeignet ist, um den Nothaltvektor (V_{E1}, V_{E2}, V_{E3}), der mit dem betrachteten Abschnitt (P₂, P₃, P₄) assoziiert ist, im Wesentlichen kollinear zu dem Referenzvektor (V₂, V₃, V₄) ist, der mit demselben betrachteten Abschnitt (P₂, P₃, P₄) der vordefinierten Trajektorie assoziiert ist, ausgehend von dem letzten tatsächlichen Bewegungsvektor des selbstfahrenden Fahrzeugs (A) und den mindestens einen Lokalisierungsdaten, die mit dem Abschnitt assoziiert sind, der dem betrachteten Abschnitt vorausgeht.

3. Vorrichtung nach Anspruch 2, wobei für den ersten Abschnitt (P₂) der Nothalttrajektorie das Rechenmodul (14) konfiguriert ist, um die Bewegungsvorgabe des selbstfahrenden Fahrzeugs (A) zu bestimmen, die geeignet ist, um den ersten Nothaltvektor (V_{E1}), der mit dem betrachteten ersten Abschnitt (P₂) assoziiert ist, kollinear zu dem Referenzvektor (V₂) zu machen, der mit demselben ersten Abschnitt (P₂) assoziiert ist, zumindest ausgehend von dem letzten tatsächlichen Bewegungsvektor V_{D} des selbstfahrenden Fahrzeugs A und den letzten Lokalisierungsdaten des selbstfahrenden Fahrzeugs A, die zu einem Zeitpunkt vor dem Empfang oder der Erzeugung der Nothaltanweisung gespeichert werden.

4. Vorrichtung nach einem der vorherigen Ansprüche, wobei das Berechnungsmodul (14) geeignet ist, um eine vordefinierte Trajektorie zu berücksichtigen, bei der sich die Abschnitte (P₁, P₂, P₃, P₄, P₅) überlappen.

5. Vorrichtung nach einem der vorherigen Ansprüche, wobei die Bewegungsvorgabe mindestens Folgendes umfasst:
- eine Anweisung, die repräsentativ für eine zu folgende Richtung ist, und/oder
- eine Anweisung, die repräsentativ für eine momentane Bewegungsgeschwindigkeit ist.

6. Vorrichtung (10) nach einem der vorherigen Ansprüche, ferner umfassend ein Störungserkennungsmodul des Moduls für autonomes Fahren für einen betrachteten Bewegungsabschnitt (P₂) durch Bestimmen einer Abweichung, die größer ist als ein vorbestimmter Schwellenwert, zwischen dem tatsächlichen Bewegungsvektor des selbstfahrenden Fahrzeugs (A) und dem Referenzvektor, die mit dem betrachteten Abschnitt assoziiert sind, und/oder durch Bestimmen der Position des Fahrzeugs außerhalb seines eigenen zugelassenen Fahrbereichs, wobei das Störungserkennungsmodul geeignet ist, um das Rechenmodul (14) im Fall einer erkannten Störung des Moduls für autonomes Fahren zu aktivieren.

7. Vorrichtung (10) nach einem der vorherigen Ansprüche, ferner umfassend ein Hindernisvermeidungsmodul (20) auf der Nothalttrajektorie, das geeignet ist, um mit dem Rechenmodul (14) mindestens eine automatische Bewegungsvorgabe des selbstfahrenden Fahrzeugs (A) zu kommunizieren, wobei das Rechenmodul (14) geeignet ist, um die Vorgabe abhängig von der Hinderniserkennung anzupassen.

8. Vorrichtung (10) nach Anspruch 7, wobei das Hindernisvermeidungsmodul (20) geeignet ist, um eine Verarbeitung von Daten durchzuführen, die von mindestens einem an Bord des selbstfahrenden Fahrzeugs (A) befindlichen Sensor geliefert werden, der zu der Gruppe gehört, die Folgendes umfasst:
- eine Geolokalisierungsausrüstung,
- ein Lidar,
- eine Kamera,
- einen Entfernungsmesser,
- Vorrichtung zum Bestimmen eines aktuellen Kurses des selbstfahrenden Fahrzeugs (A),
- eine Trägheitszentrale.

9. Autonomes Fahrzeug, das mit einem Modul für autonomes Fahren versehen ist, wobei das selbstfahrende Fahrzeug (A) geeignet ist, im Vorfeld mindestens eine vordefinierte Bewegungstrajektorie zu speichern, umfassend eine Vielzahl von aufeinanderfolgenden Referenzvektoren, die jeweils mit aufeinanderfolgenden unterschiedlichen Bewegungsabschnitten des selbstfahrenden Fahrzeugs (A) assoziiert sind, das selbstfahrende Fahrzeug (A) mindestens umfassend einen Sensor für Lokalisierungsdaten des selbstfahrenden Fahrzeugs (A),
**dadurch gekennzeichnet, dass** das selbstfahrende Fahrzeug (A) mindestens zusätzlich eine Vorrichtung (10) zum Bestimmen einer Nothalttrajektorie nach Anspruch 1 umfasst.

10. Verfahren zum Bestimmen einer Nothalttrajektorie (30) eines selbstfahrenden Fahrzeugs (A), das mit einem Modul für autonomes Fahren versehen ist, wobei das selbstfahrende Fahrzeug (A) geeignet ist, um im Vorfeld mindestens eine vordefinierte Bewegungstrajektorie zu speichern, umfassend eine Vielzahl von aufeinanderfolgenden Referenzvektoren, die jeweils mit aufeinanderfolgenden unterschiedlichen Bewegungsabschnitten des selbstfahrenden Fahrzeugs assoziiert sind,
wobei das Verfahren zum Bestimmen einer Nothalttrajektorie (30) durch die elektronische Überwachungsvorrichtung nach einem der Ansprüche 1 bis 8 implementiert wird, das Verfahren umfassend das Bestimmen einer Nothalttrajektorie, umfassend eine Vielzahl von aufeinanderfolgenden Nothaltvektoren (V_{E1}, V_{E2}, V_{E3}), die jeweils mit einem Abschnitt (P₂, P₃, P₄) assoziiert sind, der sich von einem Teil der aufeinanderfolgenden Abschnitte der vordefinierten Trajektorie unterscheidet, für jeden Nothaltevektor (V_{E1}, V_{E2}, V_{E3}) ausgehend von mindestens:
o einem zuletzt gespeicherten Vektors der tatsächlichen Bewegung des selbstfahrenden Fahrzeugs (A),
o der vordefinierten Bewegungstrajektorie des selbstfahrenden Fahrzeugs, und
o letzten Lokalisierungsdaten des selbstfahrenden Fahrzeugs (A), die von mindestens einem Sensor des selbstfahrenden Fahrzeugs (A) geliefert werden,
das Verfahren ferner umfassend:
- das Berechnen (32) mindestens einer automatischen Bewegungsvorgabe des selbstfahrenden Fahrzeugs (A), um der Nothalttrajektorie zu folgen die Notfallsteuerung (34) des selbstfahrenden Fahrzeugs (A) durch Lenken des selbstfahrenden Fahrzeugs (A) gemäß der mindestens einen Vorgabe,
eine Nothaltanweisung, die die Aktivierung eines Rechenmoduls (14) bewirkt, das die Berechnung (32) implementiert.

## Claims

1. Electronic device (10) for determining an emergency stopping trajectory of an autonomous vehicle (A) provided with an autonomous driving module, the autonomous vehicle (A) being able to store, beforehand, at least one predefined trajectory of movement comprising a plurality of successive reference vectors (V₁, V₂, V₃, V₄, V₅) respectively associated with different successive segments (P₁, P₂, P₃, P₄, P₅) of movement of the autonomous vehicle (A),
**characterized in that** the electronic device (10) for determining an emergency stopping trajectory is configured to determine an emergency stopping trajectory comprising a plurality of successive emergency stopping vectors (V_{E1}, V_{E2}, V_{E3}) each associated with a different segment (P₂, P₃, P₄) of a part of the successive segments of the predefined trajectory, from at least for each emergency stopping vector (V_{E1}, V_{E2}, V_{E3}):
∘ a stored last actual movement vector of the autonomous vehicle (A),
∘ the predefined movement trajectory of the autonomous vehicle (A), and
∘ a stored last location datum of the autonomous vehicle, and delivered by at least one sensor of the autonomous vehicle (A),
the electronic device (10) for determining an emergency stopping trajectory being automatically activable in the presence of an emergency stopping instruction, and comprises:
- a module (14) for calculating at least one automatic movement setpoint of the autonomous vehicle (A) in order to follow said emergency stopping trajectory,
- an emergency steering module (16) capable of steering the autonomous vehicle (A) according to said at least one setpoint
an emergency stopping instruction causing the activation of the module (14) for calculating.

2. Device (10) according to claim 1, wherein, for each considered segment of the emergency stopping trajectory with which an emergency stopping vector (V_{E1}, V_{E2}, V_{E3}) is respectively associated, the calculating module (14) is configured to determine the movement setpoint of the autonomous vehicle (A) capable of making the emergency stopping vector (V_{E1}, V_{E2}, V_{E3}) associated with said considered segment (P₂, P₃, P₄) substantially collinear to the reference vector (V₂, V₃, V₄) associated with the same considered segment (P₂, P₃, P₄) of the predefined trajectory, from the last actual movement vector of the autonomous vehicle (A) and said at least one location datum that are associated with the segment preceding the considered segment.

3. Device according to claim 2, wherein, for the first segment (P₂) of the emergency stopping trajectory, the calculating module (14) is configured to determine the movement setpoint of the autonomous vehicle (A) capable of making the first emergency stopping vector (V_{E1}) associated with said first considered segment (P₂) collinear to the reference vector (V₂) associated with this same first segment (P₂), at least from the last actual movement vector (V_{D}) of the autonomous vehicle (A) and the last location datum of the autonomous vehicle (A) that are stored at a moment preceding the reception, or the generation, of the emergency stopping instruction.

4. Device according to claim any one of the preceding claims, wherein the calculating module (14) is able to take account of a predefined trajectory where the segments (P₁, P₂, P₃, P₄, P₅) overlap.

5. Device according to any one of the preceding claims, wherein the movement setpoint comprises at least:
- an instruction representative of a direction to be followed, and/or
- an instruction representative of an instantaneous movement speed.

6. Device (10) according to any one of the preceding claims, further comprising a module for detecting a failure of the autonomous driving module, for a considered movement segment (P₂), by determining a deviation above a predetermined threshold between the actual movement vector of the autonomous vehicle (A) and the reference vector that are associated with the considered segment, and/or by determining the position of the vehicle outside its own authorized circulation zone, the failure detection module being capable of activating the calculation module (14) in case of detected failure of the autonomous driving module.

7. Device (10) according to any one of the preceding claims, further comprising an obstacle avoidance module (20) on the emergency stopping trajectory capable of communicating with the calculating module (14) for at least one automatic movement setpoint of the autonomous vehicle (A), the calculating module (14) being able to adapt the setpoint based on the obstacle detection.

8. Device (10) according to claim 7, wherein the obstacle avoidance module (20) is able to implement processing of data delivered by at least one sensor on board the autonomous vehicle (A) belonging to the group comprising:
- geolocation equipment,
- a lidar,
- a camera,
- an odometer,
- device for determining a current heading of the autonomous vehicle,
- an inertial unit.

9. Autonomous vehicle provided with an autonomous driving module, the autonomous vehicle (A) being able to store, beforehand, at least one predefined movement trajectory comprising a plurality of successive reference vectors respectively associated with different successive movement segments of the autonomous vehicle (A), the autonomous vehicle (A) comprising at least one location data sensor of the autonomous vehicle (A),
**characterized in that** the autonomous vehicle (A) further comprises at least one electronic device (10) for determining an emergency stopping trajectory according to claim 1.

10. Method for determining an emergency stopping trajectory (30) of an autonomous vehicle (A) provided with an autonomous driving module, the autonomous vehicle (A) being able to store, beforehand, at least one predefined trajectory of movement comprising a plurality of successive reference vectors respectively associated with different successive movement segments of the autonomous vehicle,
the method for determining an emergency stopping trajectory (30) being implemented by the electronic device according to any of claims 1 to 8, the method comprising determining an emergency stopping trajectory comprising a plurality of successive emergency stopping vectors (V_{E1}, V_{E2}, V_{E3}) each associated with a different segment (P₂, P₃, P₄) of a part of the successive segments of the predefined trajectory, from at least for each emergency stopping vector (V_{E1}, V_{E2}, V_{E3}):
∘ a stored last actual movement vector of the autonomous vehicle (A),
∘ the predefined movement trajectory of the autonomous vehicle, and
∘ a stored last location datum of the autonomous vehicle (A), and delivered by at least one sensor of the autonomous vehicle (A),
the method further comprising:
- calculating (32) at least one automatic movement setpoint of the autonomous vehicle (A) in order to follow said emergency stopping trajectory,
- emergency steering (34) of the autonomous vehicle (A) by steering the autonomous vehicle (A) according to said at least one setpoint;
an emergency stopping instruction causing the activation of the module (14) for calculating implementing said calculating (32).
